# EUROPÄISCHE PATENTSCHRIFT

(11) **EP 1 916 817 B1**
(45) Veröffentlichungstag und Bekanntmachung des Hinweises auf die Patenterteilung: **15.06.2011**
(21) Anmeldenummer: 07020790.7
(22) Anmeldetag: 24.10.2007
(51) Int. Cl.: H04W 88/02, H04L 29/06, H04M 1/253

(54) **Rufweiterleitung für eine VoIP-Telefonverbindung bei der ein Umleitungsserver in einem Sicherheitsmodul implementiert ist**
Call diversion for a VoIP telephone connection where a redirection server is implemented in a security module
Renvoi d'un appel en cas de non-réponse pour une liaison téléphonique VoIP où un serveur de redirection est implementé dans un module de sécurité

(30) Priorität: 25.10.2006 DE 102006050328
(43) Veröffentlichungstag der Anmeldung: 30.04.2008
(73) Patentinhaber: Giesecke & Devrient GmbH, 81677 München (DE)
(72) Erfinder: Hinz, Walter, Dr., 85748 Garching (DE); Spitz, Stephan, Dr., 81247 München (DE)
(74) Vertreter: Dendorfer, Claus

(56) Entgegenhaltungen:
- EP-A- 1 555 787
- SCHULZRINNE H ET AL: "Signaling for Internet telephony" PROCEEDINGS OF THE INTERNATIONAL CONFERENCE ON NETWORK PROTOCOLS, 13. Oktober 1998 (1998-10-13), Seiten 298-307, XP002139514
- WWW.SIPKNOWLEDGE.COM: "(3GPP) IMS glossary"[Online] 10. Februar 2008 (2008-02-10), XP002468733 Gefunden im Internet: URL:http://www.sipknowledge.com/IMSGlossar y.htm> [gefunden am 2008-02-12]

## Beschreibung

Die Erfindung betrifft ein System zur Rufweiterleitung für eine VoIP-Telefonverbindung gemäß dem Oberbegriff von Anspruch 1.

Als kostengünstige Alternative zu herkömmlichen Telefonverbindungen etabliert sich zunehmend die Internettelefonie. Hierbei werden Sprachdaten über eine Telefonverbindung gemäß einem Internet-Protokoll (IP) übertragen, z.B. über das Internet, oder über eine LAN-Verbindung (LAN= Local Area Network) oder über eine WLAN-Verbindung (WLAN = Wireless LAN). Mit dem Begriff VoIP-Telefonverbindung wird eine Telefonverbindung gemäß einem Internet-Protokoll (IP) bezeichnet.

Die grundlegende Funktionsweise von VoIP ist beispielsweise in einer Studie des Bundesamts für Sicherheit in der Informationstechnik (BSI) dargestellt, "VoIPSEC, Studie zur Sicherheit von Voice over Internet Protocol", Bundesamt für Sicherheit in der Informationstechnik, Oktober 2005, http://www.bsi.bund.de (BSI-Studie), oder in einer Studie des National Institute of Standards and Technology (NIST), "Security Considerations for Voice Over IP Systems", D.R. Kuhn, T.J. Walsh, S. Fries, Januar 2005 (NIST-Studie), beschrieben.

Bei einer VoIP-Telefonverbindung sind die Teilnehmer, z.B. Anrufer und Angerufener, durch ihre jeweilige IP-Adresse identifiziert. Zu übertragende Daten wie z.B. Sprachdaten werden in Pakete aufgeteilt, jedes Paket mit der IP-Adresse des Angerufenen versehen, und die Pakete an die IP-Adresse des Angerufenen versandt.

Als Endgerät, um einen Anruf für eine VoIP-Telefonverbindung zu tätigen, kann insbesondere ein Mobiltelefon verwendet werden, sofern mit dem Mobiltelefon eine Verbindung zum Internet hergestellt werden kann.

Im Bild eines mehrschichtigen Protokollmodells (wie z.B. OSI) baut eine VoIP-Telefonverbindung auf dem Internet-Protokoll IP als einer unteren Protokollschicht auf, auf der, direkt oder über weitere Schichten, mehrere VoIPspezifische Protokolle aufsetzen, z.B. RTP, SRTP, SIP, H.323 (vgl. unten).

Jede VoIP-Verbindung beginnt mit der Signalisierung, also dem Verbindungsaufbau. Die Signalisierung wird gemäß einem Signalisierungsprotokoll durchgeführt, beispielsweise gemäß der SIP-Spezifikation rfc3261 SIP oder gemäß dem Protokoll H.323, das letztere mit einem der Signalisierungsprotokolle H.225 oder H.245.

Ein Teilschritt der Signalisierung ist die Initialisierung, bei der ein Anrufer, der ein Anrufer-Endgerät benutzt, seine eigene IP-Adresse mitteilt und die IP-Adresse eines Angerufenen, der ein Angerufenen-Endgerät benutzt, ermittelt. Zur Übermittlung der IP-Adresse des Anrufers an den Angerufenen erzeugt der Anrufer eine Signalisierungsnachricht (z.B. SIP-Anfrage, z.B. SIP-Anfrage "INVITE" gemäß SIP-Spezifikation) mit der IP-Adresse des Anrufer-Endgeräts und sendet die Signalisierungsnachricht über einen dem Anrufer-Endgerät zugeordneten ersten Verbindungsserver und einen dem Angerufenen-Endgerät zugeordneten zweiten Verbindungsserver an das Angerufenen-Endgerät. Als Verbindungsserver ist beispielsweise bei SIP ein Proxy-Server, bei H.323 ein Gatekeeper vorgesehen.

Der Anrufer bekommt auf seine Signalisierungsnachricht hin eine Signalisierungsantwort zurück. Beispiele für Signalisierungsantworten nach dem SIP-Protokoll, d.h. für SIP-Antworten, sind im SIP-Protokoll rfc 3261 in Kapitel 21 "Response Codes" angegeben.

Sofern die Signalisierungsnachricht auf die oben beschriebene Weise erfolgreich weitergeleitet wird, bekommt der Anrufer eine positive Signalisierungsantwort zurück (z.B. positive SIP-Antwort, z.B. "Successful 2xx" gemäß Kapitel 21.2 der SIP-Spezifikation rfc3261). Der Angerufene sendet dann seine eigene IP-Adresse auf analoge Weise in einer Signalisierungsnachricht an den Anrufer. Nach erfolgreicher Initialisierung kann mit den ausgetauschten IP-Adressen eine VoIP-Telefonverbindung aufgebaut werden.

Bei einem erfolglosen Anrufversuch erhält der Anrufer auf seine Signalisierungsnachricht hin eine negative Signalisierungsantwort zurück. Beispiele für negative SIP-Antworten mit der Möglichkeit einer Rufumleitung sind in Kapitel 21.3 "Redirection 3xx" angegeben, z.B. die SIP-Antwort Response Code 380 "Alternative Service" (Kapitel 21.3.5), wobei im Body (Datenkörper) der SIP-Antwort alternative Verbindungsmöglichkeiten wie z.B. alternative Telefonnummern oder Faxnummern vorgesehen werden können. Weitere mögliche negative SIP-Antworten sind in Kapitel 21.4 angegeben, z.B. der Response Code 404 "Not Found" (Kapitel 21.4.5).

Ein Umleitungsserver, der beim Anrufer oder beim Angerufenen vorgesehen sein kann, insbesondere in einen Verbindungsserver integriert sein kann, wertet eingehende negative Signalisierungsnachrichten aus und veranlasst die Anwahl einer alternativen Verbindungsmöglichkeit. Ein solches System zur Rufweiterleitung entspricht dem Oberbegriff von Anspruch 1.

Die alternativen Anrufmöglichkeiten, unter denen ein Anrufer erreichbar sein kann, werden beispielsweise in einer Umleitungsdatenbank des Angerufenen oder des Anrufers bereitgehalten und - ggf. über die Verbindungsserver von Angerufenem und/ oder Anrufer - an das Endgerät des Anrufers weitergeleitet, z.B. in einer negativen Signalisierungsantwort. Der Umleitungsserver des Anrufers wählt - automatisch oder unter Mitwirkung des Anrufers - eine alternative Anrufmöglichkeit aus und tätigt einen erneuten Anrufversuch. Wahlweise stellt die Umleitungsdatenbank eine Liste mit mehreren alternativen Anrufmöglichkeiten bereit, wahlweise zusammen mit einer Prioritätenliste, die festlegt, in welcher Reihenfolge Anrufmöglichkeiten ausprobiert werden sollen, bis ein Anrufversuch erfolgreich ist.

Die Umleitungsdatenbank kann wahlweise von einem vom Endkunden (Angerufenen oder Anrufer) beauftragten Dienstleister betrieben werden. Als Dienstleister bietet beispielsweise die internationale Registrierungsstelle RIPE NCC (Réseaux IP Européen Network Coordination Centre; IP = Internet Protocol) den Service ENUM an, bei dem ein von der RIPE NCC bereitgestellter Server als Umleitungsdatenbank fungiert. Hierdurch lassen sich Rufumleitungen von VoIP-Telefonanrufen unter einer einzigen Telefonnummer an eines von mehreren beliebigen vorausbestimmten Endgeräten, wie z.B. Festnetztelefon, Mobiltelefon oder Faxgerät einrichten. Welche Endgeräte unter der Telefonnummer erreichbar sein sollen, kann z.B. der Endkunde (Anrufer oder Angerufener) selbst festlegen und verwalten. Teilweise wird ENUM auch durch die Domain-Registrierungsstelle DENIC (Deutsches Network Information Center) eG zur Verfügung gestellt.

DE 100 00 809 A1 beschreibt ein System zur Rufweiterleitung, bei dem ein zentraler Dienst die Vermittlung eines Anrufs an einen angerufenen Teilnehmer steuert. Der Dienst vermittelt den Anruf an eines von mehreren möglichen Endgeräten, insbesondere an ein IP-Endgerät, wobei eine VoIP-Verbindung aufgebaut wird.

Der Artikel "Signaling for Internet Telephony" von H. Schulzrinne und J. Rosenberg enthält eine Übersicht über das SIP-Protokoll.

EP 1555787 A2 beschreibt einen SIP-Client in einem Mobilfunkgerät, welcher die Schlüssel aus einem EAP SIM-Protokoll verwendet. Das EAP-SIM-Protokoll nutzt den GSM-Algorithmus einer herkömmlichen SIM-Karte, um aus zumindest einem von der SIM-Karte bereitgestellten Schlüssel Kc weitere Schlüssel für das EAP-SIM-Protokoll abzuleiten.

Der Erfindung liegt die Aufgabe zu Grunde, eine zum Stand der Technik alternative, flexible Möglichkeit zur Rufweiterleitung für eine VoIP-Telefonverbindung zu schaffen.

Die Aufgabe wird gelöst durch ein System nach Anspruch 1 und durch ein Verfahren nach Anspruch 10. Vorteilhafte Ausgestaltungen der Erfindung sind in den abhängigen Ansprüchen angegeben.

Das erfindungsgemäße System gemäß dem unabhängigen Anspruch 1 ist zur Rufweiterleitung für eine VoIP-Telefonverbindung bestimmt. Das System weist einen Umleitungsserver auf, der dazu eingerichtet ist, eine Rufumleitung zu mindestens einer vorbestimmbaren alternativen Verbindungsmöglichkeit zu veranlassen, falls mit einem Endgerät eines Anrufers eine VoIP-Telefonverbindung zu einer IP-Adresse eines Angerufenen nicht hergestellt werden kann. Das Endgerät des Anrufers ist so eingerichtet, dass zu seinem Betrieb ein mit einem Mikroprozessor-Chip ausgestattetes Sicherheitsmodul vorgesehen ist. Das Endgerät ist beispielsweise ein Mobiltelefon, SmartPhone, PDA mit Mobiltelefoninfrastruktur oder dergleichen, das mit einem Sicherheitsmodul wie z.B. einer SIM-Karte (GSM-System), USIM-Karte (UMTS-System) oder dergleichen oder alternativ einem fest implementierten Sicherheitsmodul betrieben wird. Das erfindungsgemäße System zeichnet sich dadurch aus, dass der Umleitungsserver in dem Sicherheitsmodul implementiert ist.

Dadurch, dass der Umleitungsserver im Endgerät oder im Sicherheitsmodul des Anrufers implementiert ist, hat der Anrufer den Umleitungsserver stets greifbar und kann ihn bedarfsweise selbst nach Wunsch konfigurieren. Folglich kann der Umleitungsserver sehr flexibel genutzt werden.

Daher ist gemäß Anspruch 1 eine zum Stand der Technik alternative und dabei flexible Möglichkeit zur Rufweiterleitung für eine VoIP-Telefonverbindung geschaffen.

Alternative Verbindungsmöglichkeiten sind wahlweise in einer Umleitungsdatenbank gespeichert, im Fall von mehreren alternativen Verbindungsmöglichkeiten wahlweise zusammen mit einer Prioritätenliste, in welcher Reihenfolge die Verbindungsmöglichkeiten durchprobiert werden sollen, bis eine Verbindung erfolgreich hergestellt werden kann oder bis die Versuche, eine Verbindung herzustellen, abgebrochen werden sollen. Wahlweise ist die Umleitungsdatenbank eine durch einen Endkunden (Anrufer oder Angerufener) konfigurierbare ENUM Datenbank.

Wahlweise sind ein oder mehrere alternative Verbindungsmöglichkeiten in einer negativen Signalisierungsantwort gemäß einem Signalisierungsprotokoll enthalten, die auf eine durch das Endgerät oder das Sicherheitsmodul veranlasste Signalisierungsnachricht gemäß einem Signalisierungsprotokoll hin beim Endgerät oder beim Sicherheitsmodul eintrifft. Im Fall von mehreren alternativen Verbindungsmöglichkeiten enthält die negative Signalisierungsantwort wahlweise zusätzlich eine Prioritätenliste zur Abarbeitung der Verbindungsmöglichkeiten wie sie weiter oben beschrieben wurde. Wahlweise stammen die Verbindungsmöglichkeiten, die in der negativen Signalisierungsantwort enthalten sind, aus einer Umleitungsdatenbank und wurden wahlweise von einem Verbindungsserver des Angerufenen aus der Umleitungsdatenbank geholt und in einen Datenkörper ("Body") der negativen Signalisierungsantwort eingefügt.

Die negative Signalisierungsantwort ist wahlweise eine negative SIP-Antwort, beispielsweise gemäß SIP-Spezifikation rfc3261, Kapitel 21.3 oder 22.4, insbesondere ein Response Code 380 "Alternative Service", wobei im Datenkörper ("Body") des Response Code 380 ein oder mehrere alternative Verbindungsmöglichkeiten angegeben sind, oder ein Response Code 404 "Not Found" oder 300 "Multiple Choices", jeweils verbunden mit ein oder mehreren alternativen Verbindungsmöglichkeiten.

Wahlweise sind die ein oder mehreren alternativen Verbindungsmöglichkeiten in einem im Endgerät oder/und im Sicherheitsmodul implementierten elektronischen Telefonbuch enthalten, und der Umleitungsserver holt die Verbindungsmöglichkeit(en) aus dem Telefonbuch.

Wahlweise umfasst die mindestens eine alternative Verbindungsmöglichkeit mindestens eines der folgenden Elemente: eine Festnetztelefonnummer, eine Mobiltelefonnummer, eine weitere IP-Adresse, eine Faxnummer.

Wahlweise ist das Endgerät oder das Sicherheitsmodul dazu eingerichtet, eine bereitgestellte Signalisierungsantwort gemäß einem Signalisierungsprotokoll auszuwerten. Die Signalisierungsantwort trifft dabei wahlweise auf eine durch das Endgerät oder das Sicherheitsmodul veranlasste Signalisierungsnachricht gemäß einem Signalisierungsprotokoll hin beim Endgerät oder Sicherheitsmodul ein. Wahlweise extrahiert das Endgerät oder das Sicherheitsmodul dabei alternative Verbindungsmöglichkeiten aus dem Datenkörper der Signalisierungsantwort. Beispielsweise wertet das Endgerät oder das Sicherheitsmodul einen SIP Response Code 380 "Alternative Service" aus und extrahiert im Body des SIP Response Codes enthaltene Verbindungsmöglichkeiten wie Telefonnummern, Faxnummern oder IP-Adressen.

Wahlweise ist das Endgerät oder das Sicherheitsmodul dazu eingerichtet, eine alternative Verbindungsmöglichkeit auszuwählen und eine Verbindung zu der alternativen Verbindungsmöglichkeit zu veranlassen, beispielsweise eine Mobiltelefonnummer oder Festnetztelefonnummer oder Faxnummer anzuwählen.

Wahlweise ist in dem Endgerät oder in dem Sicherheitsmodul ein Internet Protokoll derart implementiert, dass mittels des Endgeräts oder des Sicherheitsmoduls eine Verbindung gemäß einem Internet Protokoll herstellbar ist. Bei dieser Variante ist wahlweise der Verbindungsserver des Anrufers im Endgerät oder im Sicherheitsmodul implementiert. Wahlweise ist das Sicherheitsmodul insbesondere als Internet Smartcard gestaltet. Wahlweise ist das Endgerät insbesondere Internet Protokoll fähig, insbesondere internetfähig, gestaltet, z.B. als WAP-Handy.

Das System umfasst wahlweise das Endgerät. Wahlweise umfasst das System das Sicherheitsmodul.

Bei dem erfindungsgemäßen Verfahren zur Rufweiterleitung für eine VoIP-Telefonverbindung gemäß Anspruch 10 wird eine Rufumleitung zu einer vorbestimmbaren alternativen Verbindungsmöglichkeit veranlasst, falls mit einem Endgerät eines Anrufers eine VoIP-Telefonverbindung zu einer IP-Adresse eines Angerufenen nicht hergestellt werden kann. Das Endgerät ist so eingerichtet, dass zu seinem Betrieb ein mit einem Mikroprozessor-Chip ausgestattetes Sicherheitsmodul vorgesehen ist. Das Verfahren zeichnet sich dadurch aus, dass die Rufumleitung durch einen im Endgerät oder im Sicherheitsmodul implementierten Umleitungsserver veranlasst wird. Der Umleitungsserver wählt wahlweise eine alternative Verbindungsmöglichkeit an, insbesondere eine Festnetztelefonnummer, Mobiltelefonnummer, Faxnummer oder alternative IP-Adresse.

Im Folgenden wird die Erfindung an Hand von Ausführungsbeispielen und unter Bezugnahme auf die Zeichnung näher erläutert, in der zeigen:
- Fig. 1: ein System zur Rufweiterleitung für eine VoIP-Telefonverbindung, gemäß einer Ausführungsform der Erfindung;
- Fig. 2: ein System zur Rufweiterleitung für eine VoIP-Telefonverbindung, gemäß einer weiteren Ausführungsform der Erfindung.

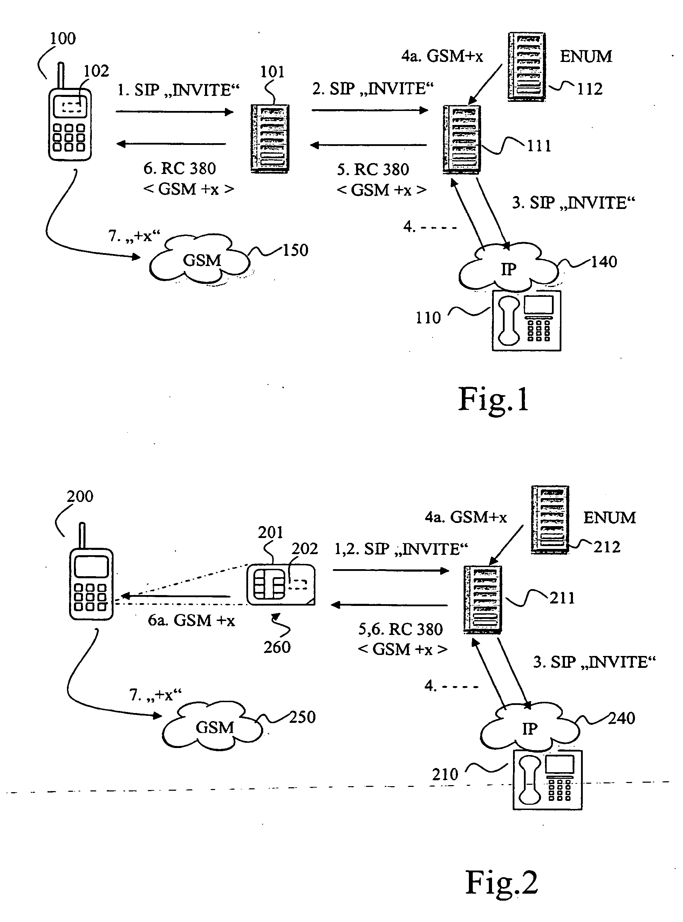

Fig.1 zeigt ein System zur Rufweiterleitung für eine VoIP-Telefonverbindung, gemäß einer Ausführungsform der Erfindung. Das System umfasst ein IP-Protokoll-fähiges, z.B. internetfähiges, Mobiltelefon als Anrufer-Endgerät 100, einen ersten dem Anrufer-Endgerät 100 zugeordneten ersten Verbindungsserver (z.B. SIP-Proxy-Server) 101, ein Angerufenen-Endgerät 110, einen dem Angerufenen-Endgerät 110 zugeordneten zweiten Verbindungsserver 111, eine dem zweiten Verbindungsserver 111 zugeordnete Umleitungsdatenbank 112 und einen im Anrufer-Endgerät 100 (Mobiltelefon) implementierten Umleitungsserver 102. Ein ebenfalls vorgesehenes Sicherheitsmodul, z.B. SIM-Karte, zum Betrieb des Endgeräts 100 ist im Endgerät 100 verborgen und in Fig.1 nicht dargestellt.

An Hand von Fig.1 wird ein Verfahren zur Rufweiterleitung für eine VoIP-Telefonverbindung gemäß einer Ausführungsform der Erfindung dargelegt. Ein Anrufer möchte mit seinem Mobiltelefon (Anrufer-Endgerät 100) eine VoIP-Telefonverbindung über ein IP-Netz 140 wie-z.B.- das Internet zum Endgerät 110 eines Angerufenen herstellen. In einem ersten Schritt sendet der Anrufer mit seinem Anrufer-Endgerät 100 (Mobiltelefon) als Signalisierungsnachricht eine SIP-Anfrage "INVITE" an den ersten Verbindungsserver 101. In einem zweiten Schritt leitet der erste Verbindungsserver 101 die SIP-Anfrage "INVITE" an den zweiten Verbindungsserver 111 weiter. In einem dritten Schritt versucht der zweite Verbindungsserver 111, die SIP-Anfrage "INVITE" an das Endgerät 110 des Angerufenen weiterzuleiten. Das Angerufenen-Endgerät 110 hat gerade keine Verbindung zum IP-Netz 140. In einem vierten Schritt bekommt der zweite Verbindungsserver 110 vom Angerufenen-Endgerät 110 keine Rückmeldung. In einem Schritt 4a fragt der zweite Verbindungsserver 111 von der Umleitungsdatenbank ENUM 112 eine alternative Verbindungsmöglichkeit ab, in diesem Fall eine GSM-Mobiltelefonnummer "+x". Der zweite Verbindungsserver 111 erzeugt als Signalisierungsantwort eine SIP-Antwort 380 "Alternative Service", in deren Datenkörper (Body) die aus der Umleitungsdatenbank 112 abgefragte GSM-Mobiltelefonnummer "+x" als alternative Verbindungsmöglichkeit eingefügt wird. In einem fünften Schritt sendet der zweite Verbindungsserver 111 die erzeugte SIP-Antwort 380 "Alternative Service" mit der GSM-Mobiltelefonnummer "+x" an den ersten Verbindungsserver 101. In einem sechsten Schritt sendet der erste Verbindungsserver 101 die SIP-Antwort 380 "Alternative Service" mit der GSM-Mobiltelefonnummer "+x" an das Anrufer-Endgerät 100. Der Umleitungsserver 102 im Anrufer-Endgerät 100 wertet die SIP-Antwort 380 "Alternative Service" aus und extrahiert daraus die GSM-Mobiltelefonnummer "+x". In einem siebten Schritt wählt das Anrufer-Endgerät 100 die extrahierte Mobiltelefonnummer "+x" über das GSM-Mobiltelefonnetz 250 an. Wahlweise wird die extrahierte Mobiltelefonnummer "+x" zunächst dem Anrufer auf einer Anzeige des Anrufer-Endgeräts 100 präsentiert, zusammen mit Auswahlmöglichkeiten, was er mit der Mobiltelefonnummer "+x" tun möchte, und die Mobiltelefonnummer "+x" wird, sofern der Anrufer die entsprechende Auswahl trifft, erst nach einer Interaktion des Anrufers angewählt.

Fig. 2 zeigt ein System zur Rufweiterleitung für eine VoIP-Telefonverbindung, gemäß einer weiteren Ausführungsform der Erfindung. Das System umfasst ein Mobiltelefon als Anrufer-Endgerät 200, ein als Internet Smartcard gestaltetes Sicherheitsmodul 260, das innerhalb des Anrufer-Endgeräts 200 betrieben wird, jedoch der Übersichtlichkeit halber außerhalb des Anrufer-Endgeräts 200 dargestellt ist, einen im Sicherheitsmodul 260 implementierten ersten Verbindungsserver (z.B. SIP-Proxy-Server) 201, ein Angerufenen-Endgerät 210, einen dem Angerufenen-Endgerät 210 zugeordneten zweiten Verbindungsserver 211, eine dem zweiten Verbindungsserver 211 zugeordnete Umleitungsdatenbank 212 und einen im Sicherheitsmodul 260 des Anrufer-Endgeräts 200 (Mobiltelefon) implementierten Umleitungsserver 202. Das Mobiltelefon 200 kann internetfähig sein, muss es aber nicht sein, da das Sicherheitsmodul 260 als Internet Smartcard gestaltet ist.

An Hand von Fig. 2 wird ein Verfahren zur Rufweiterleitung für eine VoIP-Telefonverbindung, gemäß einer weiteren Ausführungsform der Erfindung dargelegt. Ein Anrufer möchte mit seinem Mobiltelefon (Anrufer-Endgerät 200) eine VoIP-Telefonverbindung über ein IP-Netz 240 wie z.B. das Internet zum Endgerät 210 eines Angerufenen herstellen. Das Sicherheitsmodul 260 erzeugt als Signalisierungsnachricht eine SIP-Anfrage "INVITE" und sendet sie über den im Sicherheitsmodul 260 implementierten ersten Verbindungsserver 201 und den zweiten Verbindungsserver 211 zum Anrufer-Endgerät 210, Schritte 1, 2,3. Der zweite Verbindungsserver 211 bekommt vom Anrufer-Endgerät 210 keine Rückmeldung. Analog wie bei der Ausführungsform aus Fig. 1 wird mit einer aus der Umleitungsdatenbank 212 abgefragten GSM-Mobiltelefonnummer "+x" (alternative Verbindungsmöglichkeit) als Signalisierungsantwort eine SIP-Antwort 380 "Alternative Service" erzeugt und zum Anrufer-Endgerät 200 gesandt. Der im Sicherheitsmodul 260 des Anrufer-Endgeräts 200 implementierte Umleitungsserver 202 wertet die SIP-Antwort 380 "Alternative Service" aus und extrahiert daraus die GSM-Mobiltelefonnummer "+x". In einem Schritt 6a stellt der Umleitungsserver 202 die extrahierte GSM-Mobiltelefonnummer "+x" an das Anrufer-Endgerät 200 bereit, das daraufhin in einem siebten Schritt, analog wie an Hand von Fig.1 beschrieben, die GSM-Mobiltelefonnummer "+x" anwählt, wahlweise mit oder ohne Interaktion des Anrufers.

Bei alternativen Ausführungsformen sendet der zweite Verbindungsserver 111 bzw. 221 eine Signalisierungsantwort (SIP-Antwort) ohne alternative Verbindungsmöglichkeit im Datenkörper zum ersten Verbindungsserver 101 bzw. 201 zurück. Als alternative Verbindungsmöglichkeit wird dann eine Telefonnummer aus einem im Sicherheitsmodul 260 oder/und Endgerät 100 bzw. 200 gespeicherten Telefonbuch ausgewählt und wie oben beschrieben angewählt.

## Patentansprüche

1. System zur Rufweiterleitung für eine VoIP-Telefonverbindung, mit einem Umleitungsserver (102; 202), der dazu eingerichtet ist, eine Rufumleitung zu mindestens einer vorbestimmbaren alternativen Verbindungsmöglichkeit zu veranlassen, falls mit einem Endgerät (100; 200) eines Anrufers eine VoIP-Telefonverbindung zu einer IP-Adresse eines Angerufenen nicht hergestellt werden kann, wobei das Endgerät (100; 200) so eingerichtet ist, dass zu seinem Betrieb ein mit einem Mikroprozessor-Chip ausgestattetes Sicherheitsmodul (260) vorgesehen ist, wobei das Sicherheitsmodul eine SIM-Karte, USIM-Karte oder Internet Smartcard ist
**dadurch gekennzeichnet, dass**
der Umleitungsserver in dem Sicherheitsmodul (260) implementiert ist; und der Umleitungsservereingerichtet ist als die alternative Verbindungsmöglichkeit eine Telefonnummer aus einem im Sicherheitsmodul (260) und/oder Endgerät (100) gespeicherten Telefonbuch aus zuwählen.

2. System nach Anspruch 1, wobei die alternative Verbindungsmöglichkeit in einer negativen Signalisierungsantwort gemäss einem Signalisierungsprotokoll enthalten ist, die auf eine durch das Endgerät (100; 200) oder das Sicherheitsmodul (260) veranlasste Signalisierungsnachricht gemäss einem Signalisierungsprotokoll hin beim Sicherheitsmodul (260) eintrifft.

3. System nach Anspruch 1, wobei die alternative Verbindungsmöglichkeit im Sicherheitsmodul (260) implementierten elektronischen Telefonbuchs enthalten ist.

4. System nach einem der Ansprüche 1 bis 3, wobei die mindestens eine alternative Verbindungsmöglichkeit mindestens eines der folgenden Elemente umfasst: eine Festnetztelefonnummer, eine Mobiltelefonnummer, eine weitere IP-Adresse, eine Faxnummer.

5. System nach einem der Ansprüche 1 bis 4, wobei das Sicherheitsmodul (260) dazu eingerichtet ist, eine bereitgestellte Signalisierungsantwort gemäss einem Signalisierungsprotokoll, die auf eine durch das Endgerät (100; 200) oder das Sicherheitsmodul (260) veranlasste Signalisierungsnachricht gemäss einem Signalisierungsprotokoll hin beim Sicherheitsmodul (260) eintrifft, auszuwerten.

6. System nach einem der Ansprüche 1 bis 5, wobei das Sicherheitsmodul (260) dazu eingerichtet ist, eine alternative Verbindungsmöglichkeit auszuwählen und eine Verbindung zu der alternativen Verbindungsmöglichkeit zu veranlassen.

7. System nach einem der Ansprüche 1 bis 6, wobei in dem Sicherheitsmodul (260) ein Internet Protokoll (IP) derart implementiert ist, dass mittels des Sicherheitsmoduls (260) eine Verbindung gemäss einem Internet Protokoll (IP) herstellbar ist.

8. System nach einem der Ansprüche 1 bis 7, welches das Endgerät (100; 200) umfasst.

9. Verfahren zur Rufweiterleitung für eine VoIP-Telefonverbindung, wobei eine Rufumleitung zu einer vorbestimmbaren alternativen Verbindungsmöglichkeit veranlasst wird, falls mit einem Endgerät (100; 200) eines Anrufers eine VoIP-Telefonverbindung zu einer IP-Adresse eines Angerufenen nicht hergestellt werden kann, wobei das Endgerät (100; 200) so eingerichtet ist, dass zu seinem Betrieb ein mit einem Mikroprozessor-Chip ausgestattetes Sicherheitsmodul (260) vorgesehen ist, wobei das Sicherheitsmodul eine SIM-Karte, USIM-Karte oder Internetsmartcard ist
**dadurch gekennzeichnet, dass**
die Rufumleitung durch einen im Sicherheitsmodul (260) implementierten Umleitungsserver veranlasst wird und der Umleitungsserver als die alternative Verbindungsmöglichkeit eine Telefonnummer aus einem im Sicherheitsmodul (260) und/oder Endgerät (100) gespeicherten Telefonbuch auswählt.

## Claims

1. System for call diversion for a VoIP telephone connection, comprising a redirection server (102; 202) configured to initiate a call redirection to at least one predeterminable alternative connecting option if a VoIP telephone connection to an IP address of a called party cannot be established by means of a terminal (100; 200) of a calling party, the terminal (100; 200) being configured such that a security module (260) equipped with a microprocessor chip is provided for its operation, the security module being a SIM card, an USIM card or an internet smart card,
**characterised in that**
the redirection server is implemented in the security module (260); and **in that** the redirection server is configured to select as the alternative connecting option a telephone number from a telephone directory stored in the security module (260) and/or the terminal (100).

2. System according to claim 1, wherein the alternative connecting option is contained in a negative signalling reply according to a signalling protocol, said reply arriving at the security module (260) in response to a signalling message according to a signalling protocol, said message being initiated by the terminal (100; 200) or the security module (260).

3. System according to claim 1, wherein the alternative connecting option is contained in the telephone directory implemented in the security module (260).

4. System according to any one of the claims 1 to 3, wherein the at least one alternative connecting option comprises at least one of the following elements: a landline telephone number, a mobile telephone number, a further IP address, a fax number.

5. System according to any one of the claims 1 to 4, wherein the security module (260) is configured to evaluate a provided negative signalling reply according to a signalling protocol, said signalling reply arriving at the security module (260) in response to a signalling message according to a signalling protocol, said message being initiated by the terminal (100; 200) or the security module (260).

6. System according to any one of the claims 1 to 5, wherein the security module (260) is configured to select an alternative connecting option and to initiate a connection to the alternative connecting option.

7. System according to any one of the claims 1 to 6, wherein an internet protocol (IP) is implemented in the security module (260) in such a way that a connection according to an internet protocol (IP) can be established by means of the security module (260).

8. System according to any one of the claims 1 to 7, which includes the terminal (100; 200).

9. Method for call diversion for a VoIP telephone connection, wherein a call redirection to a predeterminable alternative connecting option is initiated if a VoIP telephone connection to an IP address of a called party cannot be established by means of a terminal (100; 200) of a calling party, the terminal (100; 200) being configured such that a security module (260) equipped with a microprocessor chip is provided for its operation, the security module being a SIM card, an USIM card or an internet smart card,
**characterised in that**
the call redirection is initiated by a redirection server implemented in the security module (260) and the redirection server selects as the alternative connecting option a telephone number from a telephone directory stored in the security module (260) and/or the terminal (100).

## Revendications

1. Système de renvoi automatique d'appel pour une liaison téléphonique VoIP, doté d'un serveur de redirection (102; 202) qui est agencé pour ordonner une redirection d'appel vers au moins une possibilité de liaison de rechange prédéfinissable au cas où une liaison téléphonique VoIP à une adresse IP d'un appelé ne peut pas être établie avec un terminal (100; 200) d'un appelant, le terminal (100; 200) étant agencé de sorte qu'un module de sécurité (260) équipé d'une puce de microprocesseur est prévu pour son fonctionnement, le module de sécurité étant une carte SIM, une carte USIM ou une carte intelligente Internet,
**caractérisé en ce que**
le serveur de redirection est mis en oeuvre dans le module de sécurité (260) et **en ce que** le serveur de redirection est agencé pour sélectionner comme étant la possibilité de liaison de rechange un numéro de téléphone depuis un annuaire téléphonique stocké dans le module de sécurité (260) et/ou dans le terminal (100).

2. Système selon la revendication 1, **caractérisé en ce que** la possibilité de liaison de rechange est contenue dans une réponse de signalisation négative, conforme à un protocole de signalisation, qui entre dans le module de sécurité (260) sur un message de signalisation conforme à un protocole de signalisation et ordonné par le terminal (100; 200) ou par le module de sécurité (260).

3. Système selon la revendication 1, **caractérisé en ce que** la possibilité de liaison de rechange est contenue dans l'annuaire téléphonique électronique implémenté dans le module de sécurité (260).

4. Système selon l'une des revendications 1 à 3, **caractérisé en ce que** ladite au moins une possibilité de liaison de rechange comporte au moins un des éléments suivants : un numéro de téléphone de réseau de service fixe, un numéro de téléphone mobile, une autre adresse IP, un numéro de télécopieur.

5. Système selon l'une des revendications 1 à 4, **caractérisé en ce que** le module de sécurité (260) est agencé de façon à évaluer une réponse de signalisation fournie, conforme à un protocole de signalisation, qui entre dans le module de sécurité (260) sur un message de signalisation conforme à un protocole de signalisation et ordonné par le terminal (100; 200) ou par le module de sécurité (260).

6. Système selon l'une des revendications 1 à 5, **caractérisé en ce que** le module de sécurité (260) est agencé de façon à sélectionner une possibilité de liaison de rechange et d'ordonner une liaison vers la possibilité de liaison de rechange.

7. Système selon l'une des revendications 1 à 6, **caractérisé en ce qu'**un protocole Internet (IP) est implémenté dans le module de sécurité (260) de sorte qu'une liaison peut être établie au moyen du module de sécurité (260) selon un protocole Internet (IP).

8. Système selon l'une des revendications 1 à 7, lequel comporte le terminal (100; 200).

9. Procédé de renvoi automatique d'appel pour une liaison téléphonique VoIP, une redirection d'appel étant ordonnée vers une possibilité de liaison de rechange prédéfinissable au cas où une liaison téléphonique VoIP vers une adresse IP d'un appelé ne peut pas être établie avec un terminal (100; 200) d'un appelant, le terminal (100; 200) étant agencé de sorte qu'il est prévu pour son fonctionnement un module de sécurité (260) équipé d'une puce de microprocesseur, le module de sécurité étant une carte SIM, une carte USIM ou une carte intelligente Internet,
**caractérisé en ce que**
la redirection d'appel est ordonnée par un serveur de redirection implémenté dans le module de sécurité (260) et **en ce que** le serveur de redirection sélectionne comme étant la possibilité de liaison de rechange un numéro de téléphone depuis un annuaire téléphonique stocké dans le module de sécurité (260) et/ou dans le terminal (100).
